# EUROPÄISCHE PATENTANMELDUNG

(11) **EP 3 130 427 A1**
(43) Veröffentlichungstag der Anmeldung: **15.02.2017**
(21) Anmeldenummer: 15180587.6
(22) Anmeldetag: 11.08.2015
(51) Int. Cl.: B23Q 1/66, B21D 43/13, B23K 37/04, B23K 37/047

(54) **BEARBEITUNGSSTATION UND BEARBEITUNGSANLAGE**

(71) Anmelder: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(57) **Zusammenfassung**

Die vorliegende Erfindung betrifft eine Bearbeitungsstation (100) und eine Bearbeitungsanlage. Die Bearbeitungsstation (100) zur Bearbeitung von mehreren Werkstücken (100), insbesondere Nutzfahrzeugteilen, wie z. B. Kippmulden für Kipperfahrzeuge, weist ein Grundgestell (110) auf, das einen ersten Seitenbereich (112), einen dem ersten Seitenbereich (112) beabstandet gegenüberliegenden zweiten Seitenbereich (114) und einen dazwischen angeordneten Bearbeitungsbereich (116) umfasst. Die Bearbeitungsstation (100) weist ferner mehrere übereinander angeordnete Werkstückträger (120A, 120B, 120C, 120D) auf, die jeweils am Grundgestell (110) beweglich gelagert und unabhängig voneinander in den Bearbeitungsbereich (116) beweglich sind. Jeder der mehreren Werkstückträger (120A, 120B, 120C, 120D) ist dazu ausgebildet, zumindest ein Werkstück (10) zu tragen. Die Bearbeitungsstation (100) umfasst außerdem wenigstens ein relativ zum Grundgestell (110) beweglich angeordnetes Werkzeug (134), das dazu ausgebildet ist, die Werkstücke (10) zu bearbeiten.

## Beschreibung

### Technisches Gebiet

Die vorliegende Erfindung betrifft eine Bearbeitungsstation zum Bearbeiten von Werkstücken, insbesondere zum Verbinden, Fügen und Beschichten von Nutzfahrzeugteilen, wie z. B. Kippmulden von Kippfahrzeugen. Die vorliegende Erfindung betrifft ferner eine Bearbeitungsanlage mit mehreren derartigen Bearbeitungsstationen.

### Technischer Hintergrund

Im Nutzfahrzeugbau kommen häufig einzelne Bearbeitungsstationen zum Einsatz, um jeweils spezifische Arbeiten, wie Schweißen und Lackieren von Nutzfahrzeugteilen, durchzuführen. Insbesondere werden im Rohbau Schweißroboter eingesetzt, die die unterschiedlichsten Schweißarbeiten zum dauerhaften Verbinden mehrerer Bauteile verrichten. Im Nutzfahrzeugbau werden insbesondere Kippmulden üblicherweise aus zusammengefügten Baugruppen gefertigt. Hierzu werden zunächst die bevorzugt geschweißten Baugruppen, wie z B. eine linke und rechte Seitenwand, ein Boden, eine vordere Stirnwand oder Frontwand und eine hintere Heckklappe oder Rückwand, aus Einzelteilen mittels Schweißen gefertigt und zwischengelagert. Im letzten Fertigungsschritt werden die einzelnen Schweißbaugruppen miteinander verbunden, beispielsweise verschweißt, so dass die gewünschte Kippmulde gefertigt wird.

Die DE 20 2014 100 850 U1 offenbart eine Wechselvorrichtung für Spannrahmen einer Fügestation für Karosserieteile. Die Wechselvorrichtung weist eine Speichereinrichtung für die Spannrahmen mit mehreren gesteuert beweglichen insbesondere drehbaren Rahmenmagazinen und einen Rahmenförderer auf, der den Transport der Spannrahmen zwischen Rahmenmagazinen und einer Arbeitsstelle der Fügestation vorgesehen und ausgebildet ist. Die Wechselvorrichtung weist einen weiteren Rahmentransporter auf, der ebenfalls mit den vom Rahmenförderer bedienten Rahmenmagazinen verbunden ist.

Aus der EP 1 172 170 A1 ist eine Vorrichtung zum Zuführen, Positionieren und Schweißen von Teilen einer Fahrzeugkarosserie in einer Bearbeitungsstation einer Fertigungsstraße bekannt, bei welcher zum Zuführen und/oder Positionieren der Karosserieteile zu beiden Seiten der Fertigungsstraße zumindest je ein wechselbarer Spannrahmen vorgesehen ist. Der Spannrahmen ist quer zur Fertigungsstraße verschiebbar und eventuell anhebbar angeordnet ist. Zudem ist zum Aufbewahren von Spannrahmen zumindest ein Spannrahmenmagazin vorgesehen.

Aus der EP 1 481 759 B1 ist eine Handhabungsanordnung mit einem Horizontalportal bekannt, an dem ein Schlitten horizontal verfahrbar ist. An dem Schlitten ist ein Arm um eine Achse verschwenkbar gelagert, die parallel zu dem Portal verläuft und an dem Ende des Arms ist ein Greifer für Werkstücke angeordnet. Der Schlitten weist einen länglichen Träger auf, an dem ein weiterer Schlitten vertikal verfahrbar gelagert ist, und der Arm ist an dem weiteren Schlitten verschwenkbar gelagert.

Ein der Erfindung zugrunde liegendes technisches Problem besteht darin, eine Bearbeitungsstation bereitzustellen, die hinsichtlich Platzbedarf optimiert ist und mit der die Handhabung der gefertigten Bauteile vereinfacht ist. Zudem besteht der Bedarf an einer Bearbeitungsanlage, die hinsichtlich ihrer Effizienz verbessert ist.

### Darstellung der Erfindung

Gemäß einem ersten Aspekt der vorliegenden Erfindung umfasst eine Bearbeitungsstation zur Bearbeitung von mehreren Werkstücken, insbesondere Nutzfahrzeugteilen, wie z. B. Kippmulden für Kipperfahrzeuge, ein Grundgestell, das einen ersten Seitenbereich, einen dem ersten Seitenbereich beabstandet gegenüberliegenden zweiten Seitenbereich und einen dazwischen angeordneten Bearbeitungsbereich aufweist. Die erfindungsgemäße Bearbeitungsstation weist ferner mehrere übereinander angeordnete Werkstückträger auf, die jeweils am ersten Seitenbereich und am zweiten Seitenbereich beweglich gelagert und unabhängig voneinander in den Bearbeitungsbereich hinein und aus dem Bearbeitungsbereich heraus beweglich sind. Jeder der mehreren Werkstückträger ist dazu ausgebildet, zumindest ein Werkstück zu tragen. Außerdem weist die erfindungsgemäße Bearbeitungsstation wenigstens ein relativ zum Grundgestell beweglich angeordnetes Werkzeug auf, das dazu ausgebildet ist, die Werkstücke zu bearbeiten.

Mit der erfindungsgemäßen Bearbeitungsstation kann bei geringem Platzbedarf die gewünschte Bearbeitung der Werkstücke im Bearbeitungsbereich erfolgen. Dazu werden diejenigen Werkstückträger, die die momentan nicht zu bearbeitenden Werkstücke tragen, zumindest teilweise aus dem Bearbeitungsbereich herausgefahren, damit die zu bearbeitenden Werkstücke, die auf einem sich zumindest teilweise im Bearbeitungsbereich befindlichen Werkstückträger angeordnet sind, wie gewünscht bearbeitet werden können.

Vorzugsweise sind die Werkstückträger im Wesentlichen horizontal ausgerichtet und können im Wesentlichen horizontal zumindest teilweise in den Bearbeitungsbereich hinein und zumindest teilweise aus dem Bearbeitungsbereich heraus bewegt werden. Beispielsweise sind die Werkstückträger kassettenförmig. Wenn ein oben gelegener Werkstückträger zumindest teilweise außerhalb des Bearbeitungsbereichs angeordnet ist, kann das Werkzeug ungehindert die gewünschte Bearbeitung eines sich auf einem darunter liegenden Werkstückträger angeordneten Werkstücks durchführen. Beispielsweise wird ein Werkstückträger nur um einen notwendigen Betrag aus dem Bearbeitungsbereich herausbewegt, damit die Bearbeitungsstation bei geringem Platzbedarf effizient betrieben werden kann.

Gemäß einem weiteren Aspekt der vorliegenden Erfindung ist eine Bearbeitungsanlage zur Bearbeitung von Werkstücken offenbart. Die Bearbeitungsanlage weist wenigstens zwei erfindungsgemäße Bearbeitungsstationen auf, die nebeneinander derart angeordnet sind, dass die mehreren Werkstückträger von einer Bearbeitungsstation in eine benachbarte Bearbeitungsstation übergeben werden können.

In einer beispielhaften Ausgestaltung ist am ersten Seitenbereich des Grundgestells für jeden Werkstückträger jeweils eine erste Führungsschiene angeordnet, die dazu ausgebildet ist, einen zugehörigen Werkstückträger entlang einer im Wesentlichen linearen Führungsbahn zu führen, und am zweiten Seitenbereich des Grundgestells für jeden Werkstückträger jeweils eine zweite Führungsschiene angeordnet, die dazu ausgebildet ist, einen zugehörigen Werkstückträger entlang einer im Wesentlichen linearen Führungsbahn zu führen.

In einer bevorzugten Ausführungsform sind die ersten Führungsschienen und/oder die zweiten Führungsschienen aus Gleit- und oder Rollenschienen gebildet. Alternativ oder zusätzlich können die ersten und/oder zweiten Führungsschienen teleskopartig ausgeführt sein. Die ersten Führungsschienen und/oder zweite Führungsschienen können ferner beispielsweise derart ausgebildet, dass diese den jeweiligen Werkstückträger gemäß der Bewegung einer Schublade in den Bearbeitungsbereich hinein und aus dem Bearbeitungsbereich heraus führen und bewegen können.

In einer weiteren Ausgestaltung der Bearbeitungsstation ist zumindest einer der mehreren Werkstückträger am Grundgestell, vorzugsweise an den ersten und/oder zweiten Führungsschienen, zumindest teilweise drehbar gelagert. Vorzugsweise ist der wenigstens eine drehbar gelagerte Werkstückträger zumindest dann drehbar, wenn er sich zumindest teilweise außerhalb des Bearbeitungsbereichs befindet. Die Drehbarkeit des Werkstückträgers kann beispielsweise beim Be- und Entladen des Werkstückträgers mit Werkstücken unterstützen. Zum Beispiel kann der Werkstückträger um einen gewünschten Betrag gedreht werden, damit die bereits fertig bearbeiteten Werkstücke beispielsweise mittels einer Kranvorrichtung oder manuell durch Arbeiter aus den Werkstückträgern einfach entnommen und mit neuen, noch unbearbeiteten Werkstücken bestückt werden können. Ferner können die Werkstückträger im Bearbeitungsbereich zumindest teilweise drehbar sein. Dadurch kann beispielsweise der Schweißnahtverlauf und die Schweißnahtgüte aktiv gesteuert werden.

In einer bevorzugten Ausgestaltung der Bearbeitungsstation weist zumindest einer der mehreren Werkstückträger einen rahmenförmigen Halter und eine Positionierungsvorrichtung auf, die dazu ausgebildet ist, das zumindest eine Werkstück am rahmenförmigen Halter in einer vorbestimmten Position zu positionieren. Durch die Positionierungsvorrichtung kann sichergestellt werden, dass die Werkstücke am jeweiligen Werkstückträger in der gewünschten Position gehalten werden und sich während der Bewegung der Werkstückträger und/oder während der Bearbeitung nicht verschieben, so dass eine exakte Bearbeitung der Werkstücke erfolgen kann.

Vorzugsweise weist die Positionierungsvorrichtung eine am rahmenförmigen Halter starr befestigte Werkstückhalteplatte, die mehrere Öffnungen hat, und mehrere Positionierungselemente auf, die jeweils dazu ausgebildet sind, in eine der mehreren Öffnungen derart hervorstehend eingesetzt zu werden, dass das zumindest eine Werkstück in der vorbestimmten Position positioniert ist. In der vorbestimmten Position liegen die Werkstücke an den aus den Öffnungen hervorstehenden Positionierungselementen zumindest teilweise an und können daran gehindert werden, sich relativ zum rahmenförmigen Halter auf der Werkstückhalteplatte zu verschieben. In einer weiteren bevorzugten Ausführungsform sind die Positionierungselemente ferner dazu ausgebildet, die Werkstücke zumindest teilweise gegen die Werkstückhalteplatte zu drücken.

In einer weiteren beispielhaften Ausführungsform weist die Positionierungsvorrichtung eine am rahmenförmigen Halter angebrachte Spannvorrichtung auf, die dazu ausgebildet ist, das zumindest eine Werkstück in der vorbestimmten Position zu positionieren. Zum Beispiel wird die Spannvorrichtung manuell, elektrisch, hydraulisch und/oder pneumatisch betätigt. Vorzugsweise ist der rahmenförmige Halter ein ringförmiger Träger mit einer im Wesentlichen rechteckigen Form, wobei die Werkstücke in der mittleren Öffnung des ringförmigen Halters mittels der Spannvorrichtung gehalten werden. Die Kombination eines Werkstückträgers mit Spannvorrichtung und der Drehbarkeit des Werkstückträgers ermöglicht es, nach der Bearbeitung auf einer Seite der Werkstücke den Werkstückträger zu drehen und die Werkstücke auf der anderen Seite zu bearbeiten.

Alternativ oder zusätzlich kann das Werkzeug dazu ausgebildet sein, durch den Freiraum an einem sich in der Bearbeitungsposition befindenden Werkstückträger, der zwischen dem rahmenförmigen Halter, der Spannvorrichtung und den Werkstücken gebildet ist, hindurch zu gelangen und die Werkstücke an einem darunter angeordneten und sich ebenfalls im Bearbeitungsbereich befindenden Werkstückträger zu bearbeiten.

In einer weiteren beispielhaften Ausgestaltung weist die Bearbeitungsstation eine Antriebseinheit auf, die dazu ausgebildet ist, die mehreren Werkstückträger unabhängig voneinander zu bewegen. Beispielsweise ist die Antriebseinheit eine elektrische, hydraulische und/oder pneumatische Antriebseinheit. Alternativ können die Werkstückträger manuell bewegt werden.

In einer beispielhaften Ausführungsform ist das Werkzeug an einem Werkzeugvorrichtungsgestell beweglich angebracht. Das Werkzeug, das z. B. ein am Werkzeugvorrichtungsgestell beweglich angeordneter und individuell programmierbarer 5-Achs-Roboter sein kann, ist beispielsweise eine Fügevorrichtung, eine Schweißvorrichtung, eine Lackiervorrichtung, eine Reinigungsvorrichtung, eine Stanzvorrichtung, eine Klebevorrichtung, eine Spreizvorrichtung und/oder eine Nietvorrichtung. Vorzugsweise weist der Werkzeugvorrichtungsrahmen einen oberhalb des Grundgestells der Bearbeitungsstation verlaufenden Querträger auf, der relativ zum Grundgestell beweglich sein kann und an dem das Werkzeug hängend derart angebracht ist, dass es von oben in den Bearbeitungsbereich gelangen kann. In weiteren Beispielen kann das Werkzeug im Boden verankert sein und in den Bearbeitungsgereich gelangen.

In einer weiteren Ausgestaltung der Bearbeitungsstation ist eine Schutzvorrichtung vorgesehen, die dazu ausgebildet ist, zu verhindern, dass etwaiges Schmutzmaterial, wie beispielsweise Schweißspritzer oder Lackierfarbe, aus dem Bearbeitungsbereich gelangt. Beispielsweise kann die Schutzvorrichtung in der Form eines Vorhangs vorgesehen sein, der relativ zum Grundgestell beweglich angeordnet sein kann. Ferner kann die Schutzvorrichtung in der Form einer Druckluftschleuse vorgesehen sein, durch die das Schmutzmaterial nicht durchgelangen kann.

Alternativ oder zusätzlich kann eine weitere Schutzvorrichtung vorgesehen sein, die während der Bearbeitung der Werkstücke innerhalb des Bearbeitungsbereichs zwischen zwei übereinander benachbarten Werkstückträgern eingebracht werden kann. Insbesondere ist die zwischen zwei übereinander benachbarten Werkstückträgern einbringbare Schutzvorrichtung dazu ausgebildet, zu verhindern, dass während der Bearbeitung erzeugtes Fremd- und/oder Schmutzmaterial von einem an einem oben gelegenen Werkstückträger angeordnetem Werkstück auf die an einem darunter angeordneten Werkstückträger positionierten Werkstücke gelangt. Vorzugsweise wird die Schutzvorrichtung zwischen zwei benachbarten Werkstückträgern eingefahren, wenn sich beide benachbarte Werkstückträger während der Bearbeitung übereinander angeordnet im Bearbeitungsbereich befinden.

In einer beispielhaften Ausführungsform der Bearbeitungsanlage sind die wenigstens zwei Bearbeitungsstationen mittels Übergabeschienen verbunden, an denen die mehreren Werkstückträger im Wesentlichen linear geführt und von einer Bearbeitungsstation in eine benachbarte Bearbeitungsstation übergeben werden können. Bevorzugt bilden die wenigstens zwei Bearbeitungsstationen eine Bearbeitungsstraße.

In einer weiteren Ausgestaltung der Bearbeitungsanlage ist zumindest eine zwischen die wenigstens zwei Bearbeitungsstationen ein- und ausfahrbares Schutzvorrichtung vorgesehen, die dazu ausgebildet ist, zu verhindern, dass während der Bearbeitung der Werkstücke an einer Bearbeitungsstation Fremdmaterial, wie beispielsweise Schweißspritzer oder Lackierfarbe, ungewollt in eine benachbarte Bearbeitungsstation gelangt.

In einer beispielhaften Ausführungsform ist der Abstand zwischen dem ersten Seitenbereich des Grundgestells und dem zweiten Seitenbereich des Grundgestells variabel einstellbar. Beispielsweise ist das Grundgestell teleskopartig ausgeführt, so dass das Grundgestell Werkstückträger mit unterschiedlichen Längen aufnehmen und wie hierin beschrieben verfahren kann.

In einer weiteren beispielhaften Ausgestaltung können die Werkstückträger in der Länge variabel einstellbar sein, damit die Werkstückträger der variablen Länge des Grundgestells angepasst werden können. Hierzu können die Werkstückträger, wie auch das Grundgestell, teleskopartig ausgebildet sein.

Zusätzlich oder alternativ sind die ersten und zweiten Führungsschienen dazu ausgebildet, die Werkstückträger zumindest teilweise in vertikaler Richtung am Grundgestell beweglich zu lagern, so dass der vertikale Abstand zwischen zwei benachbarten Werkstückträgern wie gewünscht eingestellt werden kann. Damit können die übereinander angeordneten Werkstückträger jeweils Werkstücke unterschiedlicher Dicke tragen, ohne dass die Gefahr einer Kollision der Werkstücke mit einem benachbarten Werkstückträger und/oder mit den auf einem benachbarten Werkstückträger positionierten Werkstücken besteht.

In einer weiteren beispielhaften Ausführungsform kann das Werkzeug dazu ausgebildet sein, auch diejenigen Werkstücke zu bearbeiten, die an Werkstückträgern angeordnet sind, die sich zumindest teilweise außerhalb des Bearbeitungsbereichs befinden. Das heißt, dass sich der Werkstückträger zwar teilweise außerhalb des Bearbeitungsbereichs befinden kann, jedoch die daran angeordneten Werkstücke noch im Bearbeitungsbereich angeordnet sind und vom Werkzeug bearbeitet werden können. Insbesondere kann das Werkzeug dazu ausgebildet sein, derart gegenüber dem Grundgestell beweglich angeordnet zu sein, dass es sämtliche Werkstücke erreichen kann, unabhängig davon, ob sich der jeweilige Werkstückträger in einer ausgefahrenen Position oder einer eingefahrenen Position befindet.

### Kurze Beschreibung der Zeichnungen

Weitere Merkmale und Aspekte der vorliegenden Erfindung werden durch die folgende Beschreibung und die beiliegenden Zeichnungen offensichtlich, in denen:
Fig. 1 eine perspektivische Ansicht einer beispielhaften Bearbeitungsstation zeigt,
Fig. 2 eine Seitenansicht der Bearbeitungsstation der Fig. 1 zeigt,
Fig. 3 eine weitere Seitenansicht der Bearbeitungsstation der Fig. 1 zeigt,
Fig. 4 eine vergrößerte Ansicht eines beispielhaften Werkstückträgers mit einem daran positionierten Werkstück zeigt,
Fig. 5 eine Draufsicht eines weiteren beispielhaften Werkstückträgers mit einem daran positionierten Werkstück zeigt,
Fig. 6 eine perspektivische Ansicht einer beispielhaften Bearbeitungsanlage zeigt, und
Fig. 7 eine schematische Seitenansicht einer weiteren beispielhaften Bearbeitungsstation zeigt.

### Ausführliche Beschreibung von Ausführungsbeispielen

Die folgende Beschreibung ist eine detaillierte Beschreibung von beispielhaften Ausführungsformen der vorliegenden Offenbarung. Die beispielhaften Ausführungsformen, die hierin beschrieben und in den Zeichnungen dargestellt sind, sind dazu bedacht, die Prinzipien der vorliegenden Offenbarung zu lehren, es dem Fachmann zu ermöglichen, diese umzusetzen und die vorliegende Offenbarung in verschiedenen Umgebungen und für verschiedene Anwendungen zu verwenden. Deshalb sind die beispielhaften Ausführungsformen nicht dazu bedacht, und sollten auch nicht dazu angesehen werden, eine beschränkende Beschreibung des Schutzbereichs zu sein. Vielmehr wird der Schutzbereich der vorliegenden Offenbarung durch die beigefügten Ansprüche definiert.

Der vorliegenden Erfindung liegt der Gedanke zu Grunde, eine Bearbeitungsstation vorzusehen, bei der mehrere Werkstücke unter optimaler Ausnutzung des verfügbaren Platzes mit einem Werkzeug bearbeitet werden können. Außerdem liegt der vorliegenden Erfindung der Gedanke zu Grunde, eine Bearbeitungsanlage bereitzustellen, bei der die Handhabung der Werkstücke vereinfacht ist, die hinsichtlich Platzbedarf optimiert ist und in ihrer Dimension den zu bearbeitenden Werkstücken anpassbar ist.

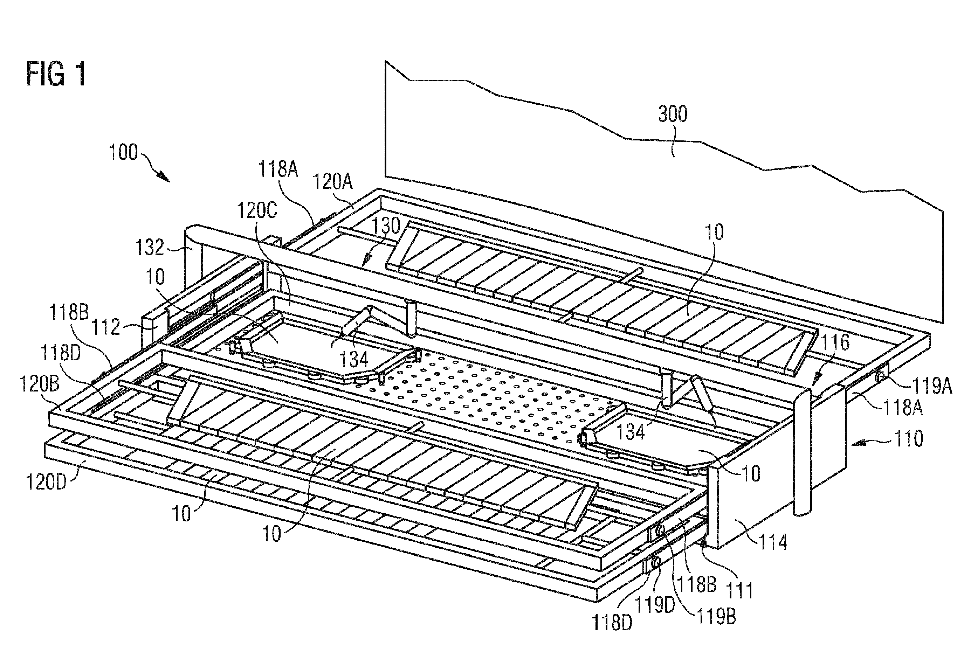

Eine beispielhafte Ausführungsform der vorliegenden Erfindung ist aus den Fig. 1 bis 7 ersichtlich. Die Fig. 1 bis 7 beziehen sich beispielhaft auf die Bearbeitung von Einzelbaugruppen einer Kippmulde, die auf einem Fahrzeugrahmen eines Kippfahrzeugs angebracht werden kann. Die dargestellten Einzelbaugruppen der Kippmulde sind als Schweißkonstruktionen ausgebildet, weshalb das in den Zeichnungen dargestellte Werkzeug zumindest einen Schweißroboter zum Verschweißen der Einzelbaugruppen aufweist. Die vorliegende Erfindung ist jedoch nicht auf eine Schweißanlage begrenzt. Insbesondere sei hier ausdrücklich erwähnt, dass die Werkzeugvorrichtung jedes im Stand der Technik bekannte Werkzeug aufweisen kann, mit dem zumindest ein Werkstück in gewünschter Weise bearbeitet werden kann. Beispielsweise weist die Werkzeugvorrichtung, eine Lackiervorrichtung, eine Reinigungsvorrichtung, eine Stanzvorrichtung, eine Klebevorrichtung, eine Spreizvorrichtung und/oder eine Nietvorrichtung auf.

In der Fig. 1 ist eine perspektivische Ansicht einer erfindungsgemäßen Bearbeitungsstation 100 gezeigt. Die Bearbeitungsstation 100 weist ein Grundgestell 110 auf, das einen ersten Seitenbereich 112, einen dem ersten Seitenbereich 112 beabstandet gegenüberliegenden zweiten Seitenbereich 114 und einen dazwischen angeordneten Bearbeitungsbereich 116 umfasst. In dem in der Fig. 1 gezeigten Beispiel sind der erste Seitenbereich 112 und der zweite Seitenbereich 114 als Seitenwände gebildet, die sich von einem plattenförmigen Grundelement 111 im Wesentlichen vertikal nach oben erstrecken. Das plattenförmige Grundelement 111 liegt auf dem Boden auf und sorgt für eine stabile Konstruktion des Grundgestells 110.

Die Bearbeitungsstation 100 weist ferner mehrere übereinander angeordnete Werkstückträger 120A, 120B, 120C, 120D auf, die an dem Grundgestell 110 beweglich gelagert sind. Insbesondere sind die Werkstückträger 120A, 120B, 120C, 120D jeweils am ersten Seitenbereich 112 und am zweiten Seitenbereich 114 unabhängig voneinander beweglich gelagert. Insbesondere sind die Werkstückträger 120A, 120B, 120C, 120D im Wesentlichen zwischen dem ersten Seitenbereich 112 und dem zweiten Seitenbereich 114 angeordnet und an beiden jeweils beweglich gelagert. Die Werkstückträger 120A, 120B, 120C, 120D sind im Wesentlichen horizontal ausgerichtet und in horizontaler Richtung senkrecht zu einer Achse, die zwischen dem ersten Seitenbereich 112 und dem zweiten Seitenbereich 114 verläuft, beweglich.

In der in der Fig. 1 dargestellten beispielhaften Ausgestaltung der Bearbeitungsstation 100 sind insgesamt vier Werkstückträger 120A, 120B, 120C, 120D vorgesehen. In weiteren erfindungsgemäßen Ausführungsformen kann die Bearbeitungsstation 100 zwei, drei oder mehr als vier Werkstückträger 120A, 120B, 120C, 120D aufweisen, die jeweils beweglich am Grundgestell 110 gelagert sind.

Die Werkstückträger 120A, 120B, 120C, 120D sind in den Fig. 1 bis 3 identisch ausgebildet, weshalb im Folgenden nur der Werkstückträger 120A näher beschrieben wird.

Wie dargestellt, ist am Werkstückträger 120A ein Werkstück 10 angeordnet, das in dem in den Zeichnungen dargestellten Beispiel eine Seitenwand einer Kippmulde für ein Kipperfahrzeug ist Das Werkstück 10 besteht aus mehreren Einzelteilen, die zum Bilden der Seitenwand der Kippmulde von dem Werkzeug 134 miteinander verschweißt werden. Beispielsweise besteht das Werkstück 10 aus mehreren Trägerprofilen und plattenförmigen Elementen, die im zusammengefügten Zustand die Seitenwand der Kippmulde bilden.

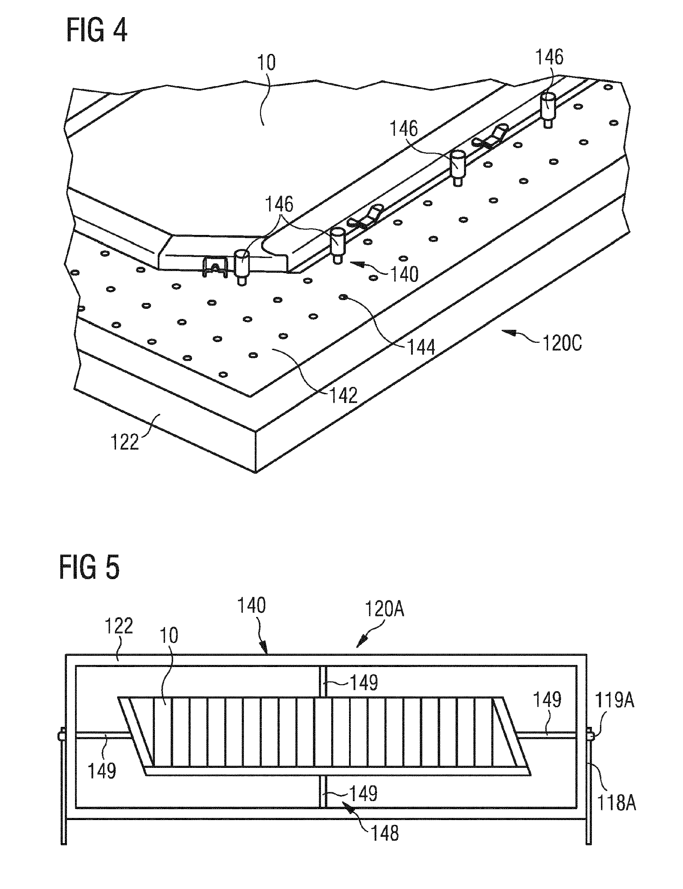

Damit das Werkstück 10 in einer vorbestimmten Position am Werkstückträger 120A gehalten werden kann, weist der Werkstückträger 120A eine Positionierungsvorrichtung 140 (siehe Fig. 4 und 5) auf, die aus Gründen der übersichtlichen Darstellung in der Fig. 1 ausgeblendet ist.

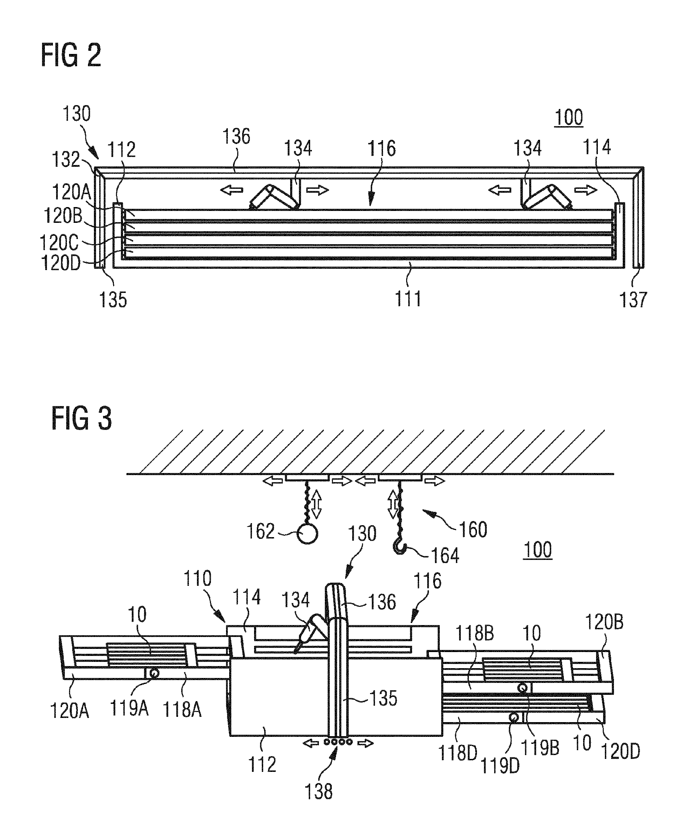

Die Bearbeitungsstation 100 der Fig. 1 weist ferner eine Werkzeugvorrichtung 130 auf, die relativ zum Grundgestell 110 beweglich sein kann (siehe Fig. 3). Die Werkzeugvorrichtung 130 umfasst einen beweglich gelagerten Werkzeugvorrichtungsrahmen 132 und zwei am Werkzeugvorrichtungsrahmen 132 beweglich angeordnete Werkzeuge 134. In einer weiteren Ausgestaltung der Werkzeugvorrichtung 130 kann am Werkzeugvorrichtungsrahmen 132 nur ein Werkzeug 134 oder mehr als zwei Werkzeuge 134 beweglich angebracht sein. Die Werkzeugvorrichtung 130 kann zusätzlich oder alternativ mehr als einen Werkzeugvorrichtungsrahmen 132 aufweisen, an dem zumindest ein Werkzeug 134 angebracht ist.

In einer Ausgestaltung können die zwei Werkzeuge 134 für unterschiedliche Bearbeitungen der Werkstücke 10 ausgebildet sein. Beispielsweise kann ein Werkzeug 134 eine Schweißvorrichtung zum miteinander Verschweißen der Werkstücke 10 aufweisen, wobei ein weiteres Werkzeug 134 eine Lackiervorrichtung zum Lackieren der geschweißten Werkstücke 10 aufweisen kann. Zusätzlich oder alternativ kann ein Werkzeug 134 eine Reinigungsvorrichtung aufweisen, die zum Reinigen der bearbeiteten, z. B. geschweißten und/oder lackierten, Werkstücke 10 ausgebildet ist. Somit ist es möglich, mehrere unterschiedliche Bearbeitungsschritte der Werkstücke 10 an einer erfindungsgemäßen Bearbeitungsstation 100 durchzuführen.

Die Werkzeuge 134 sind in der Fig. 1 beispielhaft als 5-Achs-Schweißroboter dargestellt, die entlang dem Werkzeugvorrichtungsrahmen 132 linear-beweglich angeordnet sind (siehe Fig. 2). In weiteren Ausführungsformen kann wenigstens eins der Werkzeuge 134 als Lackiervorrichtung, Reinigungsvorrichtung, Nietvorrichtung, Klebevorrichtung, Spreizvorrichtung und/oder Stanzvorrichtung ausgebildet sein.

Die Werkstückträger 120A, 120B, 120C, 120D sind jeweils unabhängig voneinander am Grundgestell 110 beweglich gelagert und können in den Bearbeitungsbereich 116 hinein und aus dem Bearbeitungsbereich 116 heraus bewegt werden. In der Fig. 1 sind die Werkstückträger 120A, 120B und 120D jeweils zumindest teilweise außerhalb des Bearbeitungsbereichs 116 angeordnet, wobei sich der Werkstückträger 120C vollständig innerhalb des Bearbeitungsbereichs 116 befindet und die Werkzeuge 134 die gewünschten Arbeiten an den auf dem Werkstückträger 120C befindlichen Werkstücken 10 verrichten können.

Wenn sich die Werkstückträger 120A, 120B, 120C, 120D zumindest teilweise innerhalb des Bearbeitungsbereichs 116 befinden, sind die jeweiligen Werkstücke 10 in der Reichweite der Werkzeuge 134, d. h. dass sich die Werkstückträger 120A, 120B, 120C, 120D in einer eingefahren Position befinden (siehe Werkstückträger 120C in der Fig. 1). Wenn sich die Werkstückträger 120A, 120B, 120C, 120D außerhalb des Bearbeitungsbereichs 116 befinden, sind die jeweiligen Werkstücke 10 außerhalb der Reichweite der Werkzeuge 134, d. h. dass sich die Werkstückträger 120A, 120B, 120C, 120D in einer ausgefahren Position befinden (siehe Werkstückträger 120A, 120B, 120D in der Fig. 1). Beispielsweise werden durch das Ausfahren der Werkstückträger 120A und 120B die auf dem darunter angeordneten Werkstückträger 120C positionierten Werkstücke 10 für die Werkzeuge 134 zugänglich, so dass die gewünschte Bearbeitung an den auf dem Werkstückträger 120C angeordneten Werkstücken 10 durchgeführt werden können.

Alternativ können sämtliche Werkstücke 10 für die Werkzeuge 134 zugänglich sein, die sich auf den Werkstückträgern 120A, 120B, 120C befinden, auch wenn die Werkstückträger 120A und 120B zumindest teilweise ausgefahren sind. In einer solchen Ausgestaltung ist die Reichweite der Werkzeuge 134 dem maximalen Ausfahrbetrag der Werkstückträger 120A, 120B, 120C, 120D angepasst und derart ausgebildet, dass die Werkzeuge 134 auch dann die Werkstücke 10 erreichen, wenn sich die jeweiligen Werkstückträger 120A, 120B, 120C, 120D in der vollständig ausgefahrenen Position befinden. Ebenso können die Werkzeuge 134 dazu ausgebildet sein, sämtliche Werkstücke 10 zu erreichen, selbst wenn die Werkstückträger 120A, 120B, 120C, 120D allesamt in den Bearbeitungsbereich eingefahren sind. Beispielsweise können die Werkzeuge 134 durch die oben angeordneten Werkstückträger 120A, 120B, 120C durch Freiräume durchgelangen und die auf dem Werkstückträger 120D angeordneten Werkstücke 10 bearbeiten.

Wie in der Fig. 1 gezeigt, können die Werkstückträger 120A, 120B, 120C, 120D zu beiden Seiten des Grundgestells 110 ausgefahren werden. Beispielsweise ist in der Fig. 1 der Werkstückträger 120A in eine in die Zeichnungsebene gerichteten Richtung aus dem Bearbeitungsbereich 116 heraus verschoben, wobei die Werkstückträger 120B und 120D in eine aus der Zeichnungsebene heraus gerichtete Richtung aus dem Bearbeitungsbereich heraus verschoben sind. In der Fig. 1 ist der Werkstückträger 120C vollständig im Bearbeitungsbereich 116 positioniert und somit sind die daran angeordneten Werkstücke für die Werkzeuge 134 erreichbar.

In der Fig. 1 ist ferner eine Schutzvorrichtung 300 dargestellt, die dazu ausgebildet ist, etwaiges Schmutzmaterial, wie beispielsweise Schweißspritzer und Lackierfarbe, das während der Bearbeitung in der Bearbeitungsstation 100 erzeugt werden kann, davor zu hindern, ungewollt aus dem Bearbeitungsbereich 116 zu gelangen. Beispielsweise kann die Schutzvorrichtung 300 in der Form von zumindest einem Vorhang oder zumindest einer Druckluftschleuse ausgebildet sein.

In einer weiteren Ausgestaltung kann die Schutzvorrichtung 300 zusätzlich oder alternativ derart ausgebildet sein, dass diese zwischen zwei benachbarten Werkstückträgern 120A, 120B, 120C, 120D in den Bearbeitungsbereich 116 ein- und ausfahrbar sein kann. Insbesondere ist die Schutzvorrichtung 300 dabei horizontal ausgerichtet. Dies kann beispielsweise verhindern, dass Schweißspritzer von einem Werkstückträger 120A, 120B, 120C, 120D auf ein an einem darunter liegenden Werkstückträger 120A, 120B, 120C, 120D angeordnetes Werkstück 10 gelangt.

Unter Verweis auf die Fig. 2 ist ersichtlich, dass der Werkzeugvorrichtungsrahmen 132 einen Querträger 136 aufweist, der sich zwischen zwei Stützträgern 135, 137 des Werkzeugvorrichtungsrahmen 132 erstreckt. Am Querträger 136 sind die Werkzeuge 134 beweglich angebracht (in der Fig. 2 durch Pfeile angedeutet). Die Stützträger 135, 137 sind jeweils relativ zum ersten Seitenbereich 112 und zweiten Seitbereich 114 auf einer dem Bearbeitungsbereich 116 gegenüberliegenden Seite angeordnet und beweglich auf dem Boden gelagert (siehe Fig. 3). Bevorzugt sind die Stützträger 135, 137 teleskopartig ausgebildet, so dass die Höhe des Querträgers 136 wie gewünscht variabel einstellbar ist. Beispielsweise können die Stützträger 135, 137 derart teleskopartig sein, dass der Querträger 136 in einer vorbestimmten Höhe positioniert sein kann, die sich von ungefähr 1 m bis ungefähr 10 m, insbesondere von ungefähr 2 m bis ungefähr 4 m, erstreckt.

Jeder der Werkstückträger 120A, 120B, 120C, 120D ist in der Darstellung der Fig. 2 innerhalb des Bearbeitungsbereichs 116 positioniert. Vorzugsweise ist jeder Werkstückträger 120A, 120B, 120C, 120D am ersten und zweiten Seitenbereich 112, 114 zumindest teilweise vertikal beweglich gelagert. Somit kann der vertikale Abstand zwischen zwei übereinander benachbarten Werkstückträgern 120A, 120B, 120C, 120D individuell angepasst werden, um beispielsweise unterschiedlichen Werkstückhöhen Rechnung zu tragen und Kollisionen der Werkstücke mit den benachbarten Werkstückträgern zu verhindern.

Obwohl es in den Zeichnungen nicht explizit dargestellt ist, kann der Grundrahmen 110 derart ausgebildet sein, dass der Abstand zwischen dem ersten Seitenbereich 112 und dem zweiten Seitenbereich 114 stufenlos einstellbar ist. Beispielsweise kann der Abstand zwischen dem ersten Seitenbereich 112 und dem zweiten Seitenbereich 114 zwischen ungefähr 2 m und ungefähr 25 m, insbesondere zwischen ungefähr 4 m und ungefähr 20 m eingestellt werden Dazu kann das Grundgestell 110 teleskopartig ausgeführt sein und kann somit Werkstückträger 120A, 120B, 120C, 120D mit unterschiedlichen Längen aufnehmen. In ähnlicher Weise kann die Länge des Querträgers 136 der Werkzeugvorrichtung 130 an den Abstand der Seitenbereiche 112, 114 individuell und stufenlos anpassbar sein. Beispielsweise ist der Querträger 136 teleskopartig ausgebildet. In ähnlicher Weise können die Werkstückträger 120A, 120B, 120C, 120D in ihrer Länge variabel sein, beispielsweise teleskopartig.

Ferner können der erste Seitenbereich 112 und/oder der zweite Seitenbereich 114 eine variabel einstellbare Breite und/oder eine variabel einstellbare Höhe aufweisen. Die Breitenrichtung ist dabei eine horizontale Richtung, die senkrecht zu einer zwischen dem ersten Seitenbereich 112 und dem zweiten Seitenbereich 114 verlaufenden Richtung. Durch die variabel einstellbare Breite kann der Bearbeitungsbereich 116 gemäß den Größenabmessungen der zu bearbeitenden Werkstücke 10 eingestellt werden. Die Breite der ersten und zweiten Seitenbereiche 112 und 114 kann beispielsweise in einem Bereich zwischen ungefähr 1 m und ungefähr 60 m liegen. Durch die variabel einstellbare Höhe der ersten und zweiten Seitenbereiche 112, 114 kann die Anzahl der am Grundgestell 110 anbringbaren Werkstückträger 120A, 120B, 120C, 120D wie gewünscht gewählt werden.

Unter Bezugnahme auf die Fig. 3 ist eine weitere Seitenansicht der Bearbeitungsstation 100 der Fig. 1 gezeigt, die entlang der Längsrichtung der Bearbeitungsstation 100 gerichtet ist. In der Fig. 3 ist gezeigt, dass die Werkzeugvorrichtung 130 auf dem Boden beweglich gelagert sein kann, beispielsweise mittels einer Bewegungseinrichtung 138. Die Bewegungseinrichtung 138 kann z. B. eine Rolleinrichtung, eine Schienenführung oder jeder weitere bekannte Einrichtung zum linearen Verschieben der Werkzeugvorrichtung 130 aufweisen. In anderen alternativen Ausgestaltungen kann der Werkzeugvorrichtungsrahmen 132 ohne Bewegungseinrichtung 138 vorgesehen sein und im Boden starr verankert sein.

Aus der Fig. 3 geht außerdem hervor, dass die Werkstückträger 120A, 120B, 120C, 120D jeweils mittels einer ersten Führungsschiene 118A, 118B, 118C (in der Fig. 3 durch den Seitenbereich 112 verdeckt), 118D am ersten Seitenbereich 112 beweglich gelagert sind. Auf der anderen Seite sind die Werkstückträger 120A, 120B, 120C, 120D mit einer zweiten Führungsschiene (in der Fig. 3 nicht explizit bezeichnet) am zweiten Seitenbereich 114 beweglich gelagert. Die ersten und zweiten Führungsschienen 118A, 118B, 118C, 118D sind dazu ausgebildet, die Werkstückträger 120A, 120B, 120C, 120D jeweils entlang einer im Wesentlichen linearen Führungsbahn zu führen.

Mittels einer nicht explizit dargestellten Antriebseinheit können die Werkstückträger 120A, 120B, 120C, 120D in den Bearbeitungsbereich 116 hinein oder aus dem Bearbeitungsbereich 1 l6heraus wie gewünscht bewegt werden. Die ersten und/oder zweiten Führungsschienen 118A, 118B, 118C, 118D sind vorzugsweise Gleit- und/oder Rollenschienen, die beispielsweise teleskopartig ausgeführt sein können und die eine vorzugsweise reibungsarme Bewegung der Werkstückträger 120A, 120B, 120C, 120D relativ zum Grundgestell 110 bereitstellen können..Die Führungsschiene 118A, 118B, 118C, 118D wirken in ähnlicher Weise wie Schubladenschienen und erlauben ein einfaches und effektives Verschieben der Werkstückträger 120A, 120B, 120C, 120D relativ zum Grundgestell 110.

In einer alternativen Ausgestaltung können die Werkstückträger 120A, 120B, 120C, 120D manuell verschoben werden. Beispielsweise kann ein Bediener der Bearbeitungsstation 100 die Werkstückträger 120A, 120B, 120C, 120D wie gewünscht relativ zum Grundgestell 110 verschieben und in den Bearbeitungsbereich 116 hinein oder aus dem Bearbeitungsbereich 116 heraus bewegen.

Die Werkstückträger 120A, 120B, 120C, 120D weisen ferner jeweils an deren Außenseiten angeordnete Drehzapfen 119A, 119B, 119C, 119D auf, die in entsprechenden Öffnungen in den Führungsschiene 118A, 118B, 118C, 118D drehbar gelagert sind. Die Drehzapfen 119A, 119B, 119C, 119D ermöglichen den Werkstückträgern 120A, 120B, 120C, 120D sich zumindest teilweise relativ zum Grundgestell 110 zu drehen. Das Drehen der Werkstückträger 120A, 120B, 120C, 120D erfolgt bevorzugt außerhalb des Bearbeitungsbereichs 116 und kann z. B. zum Anheben der bearbeitenden Werkstücke 10 mit einer an der Decke angebrachten und absenkbaren Kranvorrichtung 160, die beispielsweise einen Saugnapf 162, einen Kranhaken 164 und/oder einen aktivierbaren/deaktivierbaren Elektromagneten (nicht gezeigt) aufweist, hilfreich sein. Alternativ können die bearbeitenden Werkstücke 10 manuell von Arbeitern entnommen werden, was durch ein Drehen der Werkstückträger 120A, 120B, 120C, 120D ergonomisch begünstigt werden kann. Die Werkstückträger 120A, 120B, 120C, 120D können ferner manuell oder mittels der Kranvorrichtung 160 mit unbearbeiteten Werkstücken 10 bestückt werden.

Ferner können die Werkstückträger 120A, 120B, 120C, 120D innerhalb des Bearbeitungsbereichs 116 während der Bearbeitung der Werkstücke 10 zumindest teilweise um eine horizontal verlaufende Achse gedreht werden. Dadurch kann es beispielsweise den Werkzeugen 134 ermöglicht werden, an schwer erreichbare Stellen der Werkstücke 10 zu gelangen und die gewünschte Bearbeitung vornehmen. Beispielsweise kann durch ein teilweises Drehen der Werkstückträger 120A, 120B, 120C, 120D der Schweißnahtverlauf und die Schweißnahtgüte aktiv beeinflusst werden. Beispielsweise können die Werkstückträger 120A, 120B, 120C, 120D um eine durch die jeweiligen Drehzapfen 119A, 119B, 119C, 119D verlaufende Achse gedreht werden. Außerdem ist es möglich, dass die Werkstückträger 120A, 120B, 120C, 120D auf der Seite des ersten Seitenbereichs 112 höher gelagert sind als auf der Seite des zweiten Seitenbereichs 114, so dass die Werkstückträger 120A, 120B, 120C, 120D zumindest teilweise schief gelagert sind.

Ferner kann in einer beispielhaften Ausführungsform während der Bearbeitung der am Werkstückträger 120C angeordneten Werkstücke 10 die an den ausgefahrenen Werkstückträgern 120A, 120B, 120D angeordneten Werkstücke 10 entnommen und mit unbearbeiteten Werkstücken 10 bestückt werden.

Die Fig. 4 und 5 stellen jeweils eine Ansicht des Werkstückträgers 120C und 120A dar, der einen rahmenförmigen Halter 122 und eine daran angebrachte Positionierungsvorrichtung 140 aufweist. In der Ausführungsform der Fig. 4 weist die Positionierungsvorrichtung 140 eine am rahmenförmigen Halter 122 starr angebrachte Werkstückhalteplatte 142 auf, auf der die Werkstücke 10 aufliegen können. Die Werkstückhalteplatte 142 hat mehrere Öffnungen 144, in die jeweils Positionierungselemente 146 derart eingesetzt werden können, dass diese aus den Öffnungen 144 zumindest teilweise hervorstehen. Die Positionierungselemente 146 sind dazu ausgebildet, ein Verschieben der Werkstücke 10 auf der Werkstückhalteplatte 142 zu verhindern.

Die Positionierungselemente 146 können beispielsweise mittels einer Presspassung in die Öffnungen 144 eingesetzt werden. Alternativ können die Positionierungselemente 146 in die Öffnungen 144 eingeschraubt werden, wobei hierzu entsprechende Gewinde an den Positionierungselementen 146 und den Öffnungen 144 vorgesehen sind.

Ferner können die Positionierungselemente 146 dazu ausgebildet sein, einen aus den Öffnungen 144 hervorstehenden Abschnitt aufzuweisen, dessen Durchmesser größer ist als der in die Öffnungen 144 eingesetzte Abschnitt. Der zwischen den beiden Abschnitten mit unterschiedlichem Durchmesser gebildete Flansch an den Positionierungselementen 146 kann dazu ausgebildet sein, auf dem Werkstück 10 zumindest teilweise aufzuliegen und das Werkstück 10 zumindest teilweise gegen die Werkstückhalteplatte 142 zu drücken. Zusätzlich können die Positionierungselemente 146 eine in horizontaler Richtung vorstehende Niederhaltervorrichtung (nicht gezeigt) aufweisen, die dazu ausgebildet ist, das Werkstück 10 zumindest teilweise gegen die Werkstückhalteplatte 142 zu drücken, wenn sich die Positionierungselemente 146 in den zugehörigen Öffnungen 144 befinden und eingesetzt sind.

In einer in der Fig. 5 dargestellten alternativen Ausführungsform kann die Positionierungsvorrichtung 140 anstelle der Werkstückhalteplatte 142 und der Positionierungselemente 146 eine Spannvorrichtung 148 aufweisen, die am rahmenförmigen Halter 122 angebracht ist. Die Spannvorrichtung 148 umfasst mehrere Spannelemente 149, die sich vom rahmenförmigen Halter 122 bis hin zum Werkstück 10 erstrecken und dazu ausgebildet sind, das Werkstück 10 relativ zum rahmenförmigen Halter 122 zu positionieren. Insbesondere verspannen die Spannelemente 149 das Werkstück 10 am rahmenförmigen Halter 122. Beispielsweise sind die Spannelemente 149 manuell, hydraulisch, pneumatisch und/oder elektrisch betätigte teleskopartige Elemente, die unterschiedlichste Werkstückformen am rahmenförmigen Halter 122 spannen und positionieren können. Zusätzlich können die Spannelemente 149 jeweils Greifelemente (nicht gezeigt) aufweisen, die dazu ausgebildet sind, das Werkstück 10 zumindest teilweise zu halten. Damit kann die Positionierungsgenauigkeit des Werkstücks 10 relativ zum rahmenförmigen Halter 122 erhöht werden.

Mit der Positionierungsvorrichtung 140 der Fig. 5 ist es möglich, die Werkstücke 10 von beiden Seiten zu bearbeiten. Beispielsweise ist am Werkstückträger 120A der Fig. 5 eine Seitenwand einer Kippmulde eines Kipperfahrzeugs angeordnet, die aus mehreren Seitenelementen und einem zentralen Wandelement gebildet wird, die miteinander verschweißt werden. Dabei kann die beidseitige Verschweißung der Einzelteile hinsichtlich der Robustheit und Stabilität der Seitenwand vorteilhaft sein und die Bearbeitung der Werkstücke 10 kann wirtschaftlich und effizient durchgeführt werden.

Der Werkstückträger 120A kann nach dem Schweißvorgang auf einer Seite des Werkstücks aus dem Bearbeitungsbereich 116 bewegt werden, mittels der Drehzapfen 119A um 180° gedreht werden und dann wieder in den Bearbeitungsbereich 116 zur weiteren Schweißbearbeitung auf der Rückseite des Werkstücks 10 bewegt werden.

Die mehreren Werkstückträger 120A, 120B, 120C, 120D können unterschiedliche Positionierungsvorrichtungen 140 aufweisen. Beispielsweise kann der Werkstückträger 120A die Positionierungsvorrichtung 140 der Fig. 4 aufweisen, wobei der Werkstückträger 120B die Positionierungsvorrichtung 140 der Fig. 5 aufweisen kann. Insbesondere hängt die Wahl der Positionierungsvorrichtung 140 von den zu bearbeitenden Werkstücken 10 ab. Erfordert das Werkstück 10 eine beidseitige Bearbeitung, so kann die Positionierungsvorrichtung 140 gemäß der Fig. 5 zu bevorzugen sein. Erfordert das Werkstück 10 lediglich eine einseitige Bearbeitung, so kann die Positionierungsvorrichtung 140 gemäß der Fig. 4 zu bevorzugen sein. Außerdem kann die Positionierungsvorrichtung 140 der Fig. 4 hinsichtlich der Reduzierung von Schweißverzug vorteilhaft sein.

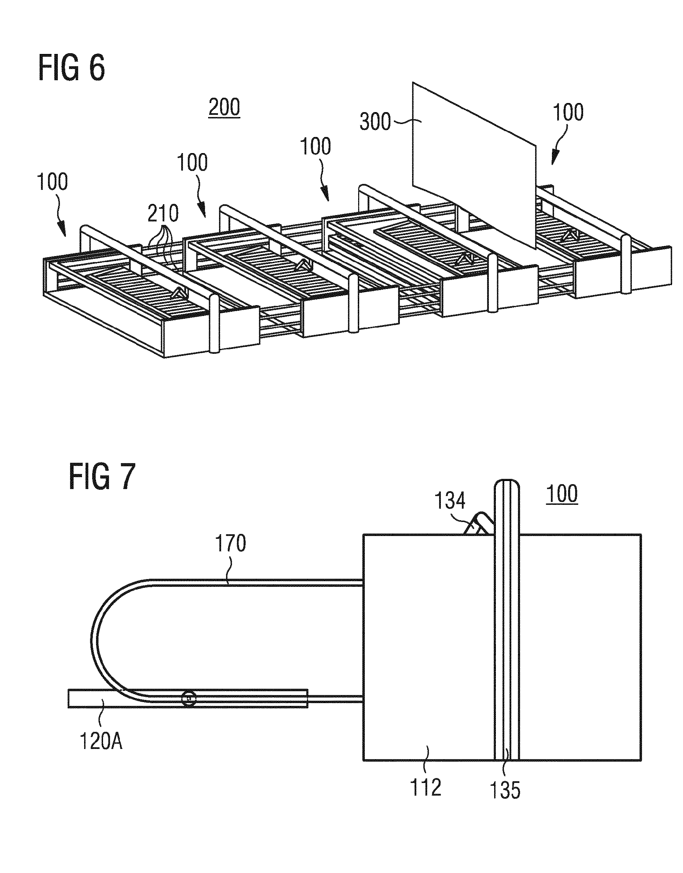

In der Fig. 6 ist eine erfindungsgemäße Bearbeitungsanlage 200 gezeigt, die vier nebeneinander angeordnete Bearbeitungsstationen 100 aufweist. Die Bearbeitungsstationen 100 sind mittels Übergabeschienen 210 miteinander verbunden, so dass die Werkstückträger 120A, 120B, 120C, 120D von einer Bearbeitungsstation 100 in eine benachbarte Bearbeitungsstation 100 übergeben werden können. In der in der Fig. 6 dargestellten Ausführungsform ist jede Bearbeitungsstation 100 dazu ausgebildet, maximal vier Werkstückträger 120A, 120B, 120C, 120D aufzunehmen und übereinander im Bearbeitungsbereich 116 anzuordnen. Demzufolge sind vier Übergabeschienen 210 vorgesehen, die die jeweiligen Führungsschienen 118A, 118B, 118C, 118D der Bearbeitungsstationen 100 miteinander verbinden. Jedoch ist die Anzahl der Übergabeschienen 210 nicht auf vier begrenzt. Beispielsweise können weniger oder mehr als vier Übergabeschienen 210 vorgesehen sein.

Alternativ können die mehreren Bearbeitungsstationen 100 anstelle der Übergabeschienen 210 direkt miteinander verbunden sein. In einer solchen Ausgestaltung weist die Bearbeitungsanlage 200 einen ersten Seitenbereich 112 und einen zweiten Seitenbereich 114 auf, wobei die Werkstückträger 120A, 120B, 120C, 120D entlang diesen beweglich sind und von einer Werkzeugvorrichtung 130 zu einer anderen Werkzeugvorrichtung 130 verschoben werden können.

An den unterschiedlichen Bearbeitungsstationen 100 können unterschiedliche Bearbeitungen vorgenommen werden. Beispielsweise können an einer ersten Bearbeitungsstation 100 die Werkstücke 10 geschweißt werden. Daraufhin können die Werkstücke 10 an einer benachbarten Bearbeitungsstation 100 gereinigt werden, damit etwaiger Schweißschmutz entfernt wird. In einer benachbarten Bearbeitungsstation 100 können die Werkstücke lackiert werden, bevor sie in der abschließenden Bearbeitungsstation 100 nochmals gereinigt, geklebt, gestanzt und/oder genietet werden können.

In der Fig. 6 ist die Schutzvorrichtung 300 gezeigt, die zwischen zwei benachbarten Bearbeitungsstationen 100 eingebracht werden kann. Die Schutzvorrichtung 300 ist beispielsweise in der Form eines Vorhangs, einer transportablen Wand oder einer Druckluftschleuse vorgesehen und dazu ausgebildet, etwaiges Fremdmaterial, das aus einer der Bearbeitungsstationen 100 stammt, davor zu hindern, ungewollt in eine andere Bearbeitungsstation 100 zu gelangen. Beispielsweise kann die Schutzvorrichtung 300 dazu angeordnet sein, etwaige Schweißspritzer, die während einem Schweißvorgang auftreten können, davor zu hindern, in z. B. die benachbarte Lackierstation zu gelangen.

Obwohl in der Fig. 6 nur eine Schutzvorrichtung 300 gezeigt ist, kann zwischen jeder Bearbeitungsstation 100 eine solche Schutzvorrichtung 300 einfahrbar sein. Zusätzlich kann eine Schutzvorrichtung 300 zwischen die Werkstückträger 120A, 120B, 120C, 120D innerhalb des jeweiligen Bearbeitungsbereichs 116 einfahrbar sein, die dazu ausgebildet ist, zu verhindern, dass Fremdmaterial von einem Werkstückträger 120A, 120B, 120C, 120D auf einen darunter angeordneten Werkstückträger 120A, 120B, 120C, 120D gelangt.

Die Fig. 7 zeigt eine Bearbeitungsstation 100, die mit einer Umkehreinrichtung 170 vorgesehen ist. Die Umkehreinrichtung 170 weist eine Umkehrschiene 172 auf, die eine Verbindung zwischen einer Führungsschiene 118A, 118B, 118C, 118D und einer darunter liegenden Führungsschiene 118A, 118B, 118C, 118D des Grundgestells 110 herstellt. Wird der Werkstückträger 120A entlang der Umkehrschiene 172 geführt, so wird dieser um 180° gedreht, so dass die an diesem Werkstückträger 120A angeordneten Werkstücke 10 von der anderen Seite bearbeitet werden können.

Obwohl die bevorzugten Ausführungsformen dieser Erfindung hierin beschrieben worden sind, können Verbesserungen und Modifikationen hierin eingearbeitet sein, ohne vom Schutzbereich der folgenden Ansprüche abzuweichen.

## Patentansprüche

1. Bearbeitungsstation (100) zur Bearbeitung von mehreren Werkstücken (10), insbesondere Nutzfahrzeugteilen, wie z. B. Kippmulden für Kipperfahrzeuge, mit:
einem Grundgestell (110), das einen ersten Seitenbereich (112), einen dem ersten Seitenbereich (112) beabstandet gegenüberliegenden zweiten Seitenbereich (114) und einen dazwischen angeordneten Bearbeitungsbereich (116) aufweist,
mehreren übereinander angeordneten Werkstückträgern (120A, 120B, 120C, 120D), die jeweils am ersten Seitenbereich (112) und am zweiten Seitenbereich (114) beweglich gelagert und unabhängig voneinander in den Bearbeitungsbereich (116) hinein und aus dem Bearbeitungsbereich (116) heraus beweglich sind, wobei jeder der mehreren Werkstückträger (120A, 120B, 120C, 120D) dazu ausgebildet ist, zumindest ein Werkstück (10) zu tragen, und
wenigstens einem relativ zum Grundgestell (110) beweglich angeordneten Werkzeug (134), das dazu ausgebildet ist, die Werkstücke (10) zu bearbeiten.

2. Bearbeitungsstation (100) nach Anspruch 1, wobei
am ersten Seitenbereich (112) für jeden Werkstückträger (120A, 120B, 120C, 120D) jeweils eine erste Führungsschiene (118A, 118B, 118C, 118D) angeordnet ist, die dazu ausgebildet ist, einen zugehörigen Werkstückträger (120A, 120B, 120C, 120D) entlang einer im Wesentlichen linearen Führungsbahn zu führen, und
am zweiten Seitenbereich (114) für jeden Werkstückträger (120A, 120B, 120C, 120D) jeweils eine zweite Führungsschiene (118A, 118B, 118C, 118D) angeordnet ist, die dazu ausgebildet ist, einen zugehörigen Werkstückträger (120A, 120B, 120C, 120D) entlang einer im Wesentlichen linearen Führungsbahn zu führen.

3. Bearbeitungsstation (100) nach Anspruch 2, wobei die ersten Führungsschienen (118A, 118B, 118C, 118D) und/oder die zweiten Führungsschienen (118A, 118B, 118C, 118D) aus Gleit- und/oder Rollenschienen gebildet sind.

4. Bearbeitungsstation (100) nach einem der vorhergehenden Ansprüche, wobei zumindest einer der mehreren Werkstückträger (120A, 120B, 120C, 120D) am Grundgestell (110) zumindest teilweise drehbar gelagert ist.

5. Bearbeitungsstation (100) nach einem der vorhergehenden Ansprüche, wobei zumindest einer der mehreren Werkstückträger (120A, 120B, 120C, 120D) einen rahmenförmigen Halter (122) und eine Positionierungsvorrichtung (140) aufweist, die dazu ausgebildet ist, das zumindest eine Werkstück (100) am rahmenförmigen Halter (122) in einer vorbestimmten Position zu positionieren.

6. Bearbeitungsstation (100) nach Anspruch 5, wobei die Positionierungsvorrichtung (140) eine am rahmenförmigen Halter (122) starr befestigte Werkstückhalteplatte (142), die mehrere Öffnungen (144) hat, und mehrere Positionierungselemente (146) aufweist, die jeweils dazu ausgebildet sind, in eine der mehreren Öffnungen (144) derart hervorstehend eingesetzt zu werden, dass das zumindest eine Werkstück (10) in der vorbestimmten Position positioniert ist.

7. Bearbeitungsstation (100) nach einem der Ansprüche 5 und 6, wobei die Positionierungsvorrichtung (140) eine am rahmenförmigen Halter (122) angebrachte Spannvorrichtung (148) aufweist, die dazu ausgebildet ist, das zumindest eine Werkstück (10) in der vorbestimmten Position zu positionieren.

8. Bearbeitungsstation nach Anspruch 7, wobei die Spannvorrichtung (148) manuell, elektrisch, hydraulisch und/oder pneumatisch betätigt wird.

9. Bearbeitungsstation (100) nach einem der Ansprüche 5 bis 8, wobei der rahmenförmige Halter (122) eine im Wesentlichen rechteckige Form hat.

10. Bearbeitungsstation (100) nach einem der vorhergehenden Ansprüche, ferner mit einer Antriebseinheit, die dazu ausgebildet ist, die mehreren Werkstückträger (120A, 120B, 120C, 120D) unabhängig voneinander zu bewegen.

11. Bearbeitungsstation (100) nach einem der vorhergehenden Ansprüche, wobei die Werkstückträger (120A, 120B, 120C, 120D) im Wesentlichen horizontal ausgerichtet sind, wenn diese im Bearbeitungsbereich (116) angeordnet sind.

12. Bearbeitungsstation (100) nach einem der vorhergehenden Ansprüche, wobei das wenigstens eine Werkzeug (134) eine Fügevorrichtung, eine Schweißvorrichtung, eine Lackiervorrichtung, eine Reinigungsvorrichtung, eine Stanzvorrichtung, eine Klebevorrichtung, eine Spreizvorrichtung und/oder eine Nietvorrichtung aufweist.

13. Bearbeitungsanlage (200) zur Bearbeitung von Werkstücken, mit:
wenigstens zwei Bearbeitungsstationen (100) nach einem der vorhergehenden Ansprüche, die nebeneinander derart angeordnet sind, dass die mehreren Werkstückträger (120A, 120B, 120C, 120D) von einer Bearbeitungsstation (100) in eine benachbarte Bearbeitungsstation (100) übergeben werden können.

14. Bearbeitungsanlage (200) nach Anspruch 13, wobei die wenigstens zwei Bearbeitungsstationen (100) mittels Übergabeschienen (210) verbunden sind, an denen die mehreren Werkstückträger (120A, 120B, 120C, 120D) von einer Bearbeitungsstation (100) in eine benachbarte Bearbeitungsstation (100) geführt werden.

15. Bearbeitungsanlage (200) nach einem der Ansprüche 13 und 14, ferner mit einer zwischen die wenigstens zwei Bearbeitungsstationen (100) ein- und ausfahrbaren Schutzvorrichtung (300), die dazu ausgebildet ist, es zu verhindern, dass während der Bearbeitung der Werkstücke (10) an einer Bearbeitungsstation (100) Fremdmaterial in eine benachbarte Bearbeitungsstation (100) gelangt.
